# EUROPÄISCHE PATENTSCHRIFT

(11) **EP 2 669 650 B1**
(45) Veröffentlichungstag und Bekanntmachung des Hinweises auf die Patenterteilung: **06.11.2019**
(21) Anmeldenummer: 13169665.0
(22) Anmeldetag: 29.05.2013
(51) Int. Cl.: G01M 9/04, F15D 1/08

(54) **Windkanaldüse und Windkanal**
Wind tunnel nozzle and wind tunnel
Buse de soufflerie et soufflerie

(30) Priorität: 30.05.2012 DE 102012104684
(43) Veröffentlichungstag der Anmeldung: 04.12.2013
(73) Patentinhaber: FORSCHUNGSINSTITUT FÜR KRAFTFAHRWESEN UND FAHRZEUGMOTOREN STUTTGART, D-70569 Stuttgart (DE)
(72) Erfinder: Beland, Oliver, 70499 Stuttgart (DE)
(74) Vertreter: Hoeger, Stellrecht & Partner Patentanwälte mbB

(56) Entgegenhaltungen:
- FR-A1- 2 682 435
- JP-A- H04 110 630
- JP-B2- 3 139 587

## Beschreibung

Die vorliegende Erfindung betrifft eine Windkanaldüse für einen Windkanal, insbesondere für einen Fahrzeugwindkanal, welche eine Strömungsrichtung definiert, mit einer inneren Düsenwand und einer Düsenaustrittskante, wobei ferner eine Einrichtung zum Aufbrechen kohärenter Wirbelstrukturen eines aus der Windkanaldüse austretenden Freistrahls vorgesehen ist, wobei die Einrichtung mindestens ein an der inneren Düsenwand angeordnetes oder ausgebildetes, sich in Strömungsrichtung erstreckendes und eine Breite quer zur Strömungsrichtung aufweisendes Strahlleitelement umfasst, welches eine von der Düsenwand vorspringende oder gegenüber dieser zurückgesetzte und von dieser weg weisende Leitfläche aufweist, wobei die Leitfläche ein Abstandsprofil aufweist und wobei ein Abstand eines stromaufwärts gerichteten Endes des mindestens einen Strahlleitelements von der Düsenwand Null beträgt und wobei ein Abstand eines stromabwärts gerichteten Endes des Strahlleitelements von der Düsenaustrittskante Null oder im Wesentlichen Null beträgt.

Ferner betrifft die vorliegende Erfindung einen Windkanal, insbesondere einen Windkanal für aeroakustische Messungen mit geschlossener Luftführung, umfassend eine Windkanaldüse.

Heutzutage werden in der und für die Automobilindustrie häufig Windkanäle mit geschlossener Luftführung und Freistrahlmessstrecken genutzt, also Windkanäle nach der sogenannten "Göttinger-Bauart". Ein Prinzip bedingter Nachteil derartiger Windkanäle ist, dass sich bei bestimmten Luftgeschwindigkeiten, also Strömungsgeschwindigkeiten eines aus der Düse austretenden Freistrahls, niederfrequente Druckschwingungen entwickeln, die den Kanal, ähnlich wie bei einer Orgelpfeife, in Resonanz versetzen können. Die Anregung erfolgt durch eine periodische Ablösung diskreter Ringwirbel an der Düsenaustrittskante, welche ihrerseits wiederum durch die Luftsäulenschwingung verstärkt werden. Typische Frequenzen dieser Druckschwingungen liegen bei Fahrzeugwindkanälen im Bereich unterhalb 15 Hz, insbesondere bei etwa 1 Hz bis etwa 10 Hz. Ereignisse in diesem Frequenzbereich sind zwar praktisch nicht hörbar, können aber für tragende Strukturen des Windkanals durchaus kritisch werden. Kommt es im Falle auftretender Resonanzerscheinungen zu einer Modulation des Strömungsgeräusches, so können die auch als Pumpschwingungen bezeichneten Druckschwingungen des Windkanals insbesondere auch als Geräusch wahrgenommen werden, welches als sogenanntes "Kanal-Wummern" bezeichnet wird.

Das Auftreten von Druckschwankungen durch die beschriebene Anregung kann somit die Ergebnisse akustischer und aerodynamischer Messungen signifikant beeinflussen.

Am Düsenaustritt der Windkanaldüse, welche insbesondere ausgebildet sein kann, um die Strömung zu beschleunigen, kommt es zu einer natürlichen Wirbelausbildung durch die Vermischung des aus der Windkanaldüse austretenden Freistrahls mit der ruhenden Umgebungsluft in der offenen Freistrahlmessstrecke. Bei dieser Vermischung entstehen Ringwirbel, die sich mit etwa 65% der Strömungsgeschwindigkeit des Strahlkerns des Freistrahls in Richtung des sogenannten Kollektors, welcher als Luftauffangelement am Ende der Messstrecke dient, bewegen. Während der Bewegung stromabwärts erfahren die Wirbel eine räumliche Ausdehnung und die Frequenzmaxima bewegen sich zu tieferen Frequenzen hin. Die Wirbel-Ablösefrequenz ist neben den Düsenabmessungen auch abhängig von der Freistrahl-Geschwindigkeit. Am Ende der Freistrahlmessstrecke prallen die Wirbelstrukturen auf den Kollektor beziehungsweise auf eine Wand des sogenannten Plenums, welche die Freistrahlmessstrecke umgibt, und erzeugen dadurch eine Druckstörung, die sich im Plenum, insbesondere auch stromaufwärts, verteilt. Wieder am Düsenaustritt angekommen, wird eine erneute Wirbelablösung bewirkt.

Die Luftführung eines Windkanals nach Göttinger-Bauart kann auch als ein offenes Rohr ähnlich einer Orgelpfeife angesehen werden. In einem solchen System ist die Ausbildung von stehenden Wellen möglich. Ein Kennzeichen stehender Wellen sind ortsfeste Schalldruck-Knoten und Schalldruck-Bäuche im Abstand einer halben Wellenlänge. Die Windkanal-Eigenfrequenzen und deren harmonische Vielfache sind abhängig von der Länge der Kanalröhre und der Schallgeschwindigkeit, aber nicht von der Strömungsgeschwindigkeit. Nähern sich, abhängig von der Strömungsgeschwindigkeit, die Wirbel-Ablösefrequenz und die Kanal-Eigenfrequenzen an, kommt es zu Resonanzanregungen mit der Folge deutlicher Druckschwankungen im Plenum sowie in der Luftführung. Wie oben bereits erwähnt, können diese Pulsationen das Strömungsgeräusch modulieren, was akustische Untersuchungen an Fahrzeugen in den betroffenen Geschwindigkeitsbereichen stark beeinflusst. Auch die Ergebnisse aerodynamischer Bewertungen an Fahrzeugen werden bei Geschwindigkeitsbereichen mit Resonanzerscheinungen verfälscht. Aus diesen Gründen ist eine Vermeidung beziehungsweise eine Minimierung der Resonanzanregung unerlässlich.

Bekannt ist es, stromabwärts der Düsenaustrittskante benachbart derselben sogenannte "Seiferth-Flügel" anzuordnen. Hierbei handelt es sich um Luftleitbleche, mit denen die kohärente Wirbelstruktur aufgebrochen werden und das Anregen der Resonanzen erfolgreich verhindert werden kann. Allerdings erzeugen diese oder vergleichbare Anordnungen ein sehr starkes Eigengeräusch und sind somit für aeroakustische Untersuchungen ungeeignet. Ein weiterer Nachteil der Seiferth-Flügel ist der Einfluss auf den statischen Druckverlauf im Freistrahl.

Zur Lösung des beschriebenen Problems wird in der EP 0 894 253 B1 ein Windkanal vorgeschlagen, in welchem gegenphasige Signale, sogenannter Antischall, mittels an geeigneter Position eingebrachten Lautsprechern zur Vermeidung von Resonanzerscheinungen erzeugt werden. Dies ist mit zusätzlichem technischen Aufwand verbunden, da insbesondere bei einer sich ändernden Geschwindigkeit des Freistrahls eine entsprechende Regelung erforderlich ist.

Alle beschriebenen, aus dem Stand der Technik bekannten Lösungen haben die bereits beschriebenen Nachteile oder sind technisch sehr aufwändig, wie zum Beispiel das Anbringen von Lautsprechern, die in definierter Weise, insbesondere in Abhängigkeit einer Geschwindigkeit des Freistrahls, zur Erzeugung von Schallwellen angeregt werden müssen.

Ferner sind aus der JP 3 139587 B2 sowie der JP H04 110630 A Windkanaldüsen und Windkanäle bekannt. In der FR 2 682 435 A1 sind Verfahren und Vorrichtungen zur Verringerung des Geräuschs einer Unterschallströmung beschrieben.

Es ist daher eine Aufgabe der vorliegenden Erfindung, die Durchführung von aeroakustischen Messungen in einem Windkanal zu verbessern.

Diese Aufgabe wird bei einer Windkanaldüse als auch bei einem Windkanal der eingangs beschriebenen Art erfindungsgemäß dadurch gelöst, dass ein Abstand eines stromabwärts gerichteten Endes des mindestens einen Strahlleitelements von der Düsenwand Null oder im Wesentlichen Null beträgt.

Durch das Vorsehen mindestens eines, vorzugsweise mehrerer Strahlleitelemente kann das Auftreten des sogenannten "Kanal-Wummerns" minimiert oder sogar ganz vermieden werden. Beim Überströmen der Strahlleitelemente rollen sich Längswirbel mit einer Drehachse parallel zur Strömungsrichtung an Längskanten als Folge entstehender Druckdifferenzen zwischen in Bereichen mit Strahlleitelementen und in Bereichen ohne Strahlleitelemente an der inneren Düsenwand auf. Diese so ausgebildeten stabilen Wirbelformationen treffen stromabwärts orthogonal auf die am Düsenaustritt generierten Ringwirbel und zerschlagen deren Struktur. Zusätzlich kommt es durch die generierten Längswirbel in der Folge zu einer Stabilisierung des Freistrahles. Als Folge der Überströmung stellen sich an der Düsenaustrittskante in den Bereichen mit Strahlleitelementen gegenüber Bereichen ohne Beeinflussung abweichende Abströmwinkel des Freistrahles in die Messstrecke ein. In der Summe wird die oben beschriebene Resonanzanregung im Plenum beziehungsweise in der Luftführung minimiert, im besten Fall sogar ganz verhindert. Da die Strahlleitelemente insbesondere eine passive Maßnahme an der Windkanaldüse darstellen, ermöglichen sie es als sogenannte Primärmaßnahme, die Resonanzanregung am Ort des Entstehens zu unterbinden, anstatt den Folgen der Resonanzanregung mit technischem Aufwand entgegenzuwirken. Es ist so insgesamt möglich, mit geringem konstruktivem Aufwand den Anrege-Mechanismus zur Resonanzausbildung effektiv zu behindern oder ganz zu unterbinden, ohne größere bauliche Eingriffe im Windkanal und ohne zusätzliche Generierung von Eigengeräuschen. Eine Nachrüstung bestehender Windkanäle ist auf einfache Weise möglich. Die vorgeschlagene Weiterbildung funktioniert sowohl bei 1:1-Windkanälen als auch bei Modellwindkanälen anderen Maßstabs, beispielsweise bei Modellwindkanälen im Maßstab 1:2 oder 1:5. Die Leitfläche weist ein Abstandsprofil auf und ein Abstand eines stromaufwärts gerichteten Endes des mindestens einen Strahlleitelements von der Düsenwand beträgt Null oder im Wesentlichen Null. Mit anderen Worten bedeutet dies, dass keine der Strömung entgegen gerichtete, also stromaufwärts gerichtete, Kante oder Fläche durch das Strahlleitelement gebildet wird, sondern dass die Leitfläche ein zusammen mit der inneren Düsenwand stetiges Abstandsprofil bildet. So werden zusätzliche unerwünschte Wirbelbildungen verhindert. Um die mittels des mindestens einen Strahlleitelements erzeugten Längswirbel bis zur Düsenaustrittskante hin definiert leiten zu können, beträgt ein Abstand eines stromabwärts gerichteten Endes des Strahlleitelements von der Düsenaustrittskante Null oder im Wesentlichen Null. Die Leitfläche weist ein Abstandsprofil auf und ein Abstand eines stromabwärts gerichteten Endes des mindestens einen Strahlleitelements von der Düsenwand beträgt Null oder im Wesentlichen Null. Durch diesen stetigen Übergang des Abstandsprofils zur Düsenwand wird die Ausbildung zusätzlicher Wirbel weiter verringert. Das stromabwärts gerichtete Ende des Strahlleitelements reicht bis zur Düsenaustrittskante heran. Es ist jedoch vorteilhaft, wenn eine Kontur der Düsenaustrittkante durch das mindestens eine Strahlleitelement nicht verändert wird.

Um besonders effizient Längswirbel mit einer Drehachse parallel zur Strömungsrichtung am mindestens einen Strahlleitelement erzeugen zu können, ist es günstig, wenn das mindestens eine Strahlleitelement eine Längsrichtung definiert, welche sich parallel zur Strömungsrichtung erstreckt.

Um die positiven Eigenschaften der Windkanaldüse weiter zu verbessern, ist es vorteilhaft, wenn eine Mehrzahl von Strahlleitelementen an der Windkanaldüse vorgesehen ist. Mit mehreren Strahlleitelementen, beispielsweise zwei, drei, vier oder mehr pro Wandabschnitt der Düsenwand, lässt sich die Resonanzanregung noch effizienter unterbinden. Mit mehreren Strahlleitelementen lassen sich mehrere Längswirbel, also Wirbel mit einer Rotationsachse parallel zur Strömungsrichtung, generieren und somit die Anregung der Resonanzen in der Freistrahlmessstrecke beziehungsweise in der Luftführung minimieren.

Besonders einfach ausbilden lässt sich die Windkanaldüse, wenn die Mehrzahl von Strahlleitelementen parallel zueinander angeordnet ist. Dadurch lassen sich auch Längswirbel parallel zueinander ausbilden, und zwar senkrecht zu den bei der Ablösung des Freistrahls an der Düsenaustrittskante entstehenden Ringwirbeln.

Vorteilhaft ist es, wenn die Mehrzahl von Strahlleitelementen äquidistant angeordnet ist. So lassen sich mit den Strahlleitelementen Längswirbel in besonders definierter Weise generieren. Um regelmäßige Wirbelmuster längs der Freistrahlmessstrecke zu vermeiden, kann es jedoch auch vorteilhaft sein, wenn die Mehrzahl von Strahlleitelementen in ungleichen Abständen voneinander angeordnet ist.

Um die Struktur der an der Düsenaustrittskante generierten Ringwirbel möglichst gut zu zerstören, ist es günstig, wenn ein Abstand benachbarter Strahlleitelemente in einem Bereich liegt, welcher etwa dem 0,5-fachen bis etwa dem 3-fachen einer Breite der Strahlleitelemente quer zur Strömungsrichtung, vorzugsweise etwa dem 0,8-fachen bis etwa dem 2-fachen, entspricht.

Um einen möglichst stabilen Freistrahl zu erhalten, ist es vorteilhaft, wenn sich die Windkanaldüse in Strömungsrichtung zur Austrittskante hin verjüngt. Insbesondere ist es denkbar, dass ein letzter Abschnitt der Windkanaldüse im Querschnitt konstant bleibt bis zur Düsenaustrittskante hin. Aus Gründen einer verbesserten Strömungsqualität kann eine stetige Erweiterung der Querschnittsfläche im letzten Abschnitt der Windkanaldüse bis zur Düsenaustrittskante vorteilhaft sein.

Besonders einfach herstellen lässt sich die Windkanaldüse, wenn sie einen runden, halbrunden, vieleckigen, insbesondere rechteckigen Querschnitt aufweist. Damit kann sich ein im Wesentlichen der Querschnittsform der Windkanaldüse entsprechender Freistrahl längs der Freistrahlmessstrecke im Plenum erzeugen lassen.

Vorteilhaft ist es, wenn die Windkanaldüse vier ebene, sich von der Düsenaustrittskante stromaufwärts erstreckende Düsenwandabschnitte umfasst. Eine solche Windkanaldüse lässt sich auf besonders einfache Weise herstellen.

Vorteilhaft ist es, wenn jeweils zwei Düsenwandabschnitte parallel oder im Wesentlichen parallel zueinander ausgerichtet sind. Dies ermöglicht es, den Strahl bereits in der Düse ein Stück seines Wegs im Kanal in definierter Weise zu führen, um einen möglichst stabilen Freistrahl zu erhalten.

Gemäß einer weiteren günstigen Ausführungsform der Erfindung kann vorgesehen sein, dass eine Breite des mindestens einen Strahlleitelements quer zur Strömungsrichtung in einem Bereich liegt, welcher etwa dem 0,05-fachen bis etwa 0,2-fachen einer Höhe der Windkanaldüse, vorzugsweise etwa dem 0,08-fachen bis etwa 0,15-fachen, entspricht. Abhängig von der Breite und dem Abstand können unter Berücksichtigung der tatsächlichen Höhe der Windkanaldüse beispielsweise zwischen drei und 15 Strahlleitelemente an einem seitlichen Düsenwandabschnitt und beispielsweise zwischen fünf und 25 Strahlleitelementen an einem oberen Querabschnitt der Windkanaldüse angeordnet werden. Insbesondere ist es denkbar, dass das mindestens eine Strahlleitelement keine konstante Breite aufweist, sondern eine sich in Richtung der Düsenaustrittskante zunehmende Breite. Eine weitere Variante wäre, zwischen einem proximalen und einem distalen Ende des mindestens einen Strahlelements eine minimale Breite oder eine maximale Breite vorzusehen, was insbesondere durch konkav beziehungsweise konvex gekrümmte, vom mindestens einen Strahlleitelement weg weisende Seitenflächen erreichbar ist.

In Windkanälen, insbesondere in 1:1 Fahrzeugwindkanälen, ist es günstig, wenn eine Breite des mindestens einen Strahlleitelements quer zur Strömungsrichtung in einem Bereich von etwa 0,15 m bis etwa 0,5 m liegt, vorzugsweise in einem Bereich von etwa 0,2 m bis etwa 0,4 m. Strahlleitelemente, die eine Breite in den angegebenen Bereichen aufweisen, ermöglichen es, eine ausreichende Zahl und hinreichend stabile Längswirbel mit einer Rotationsachse parallel zur Strömungsrichtung zu erzeugen.

Günstig ist es, wenn eine Breite des mindestens einen Strahlleitelements quer zur Strömungsrichtung zwischen Enden desselben variiert. Insbesondere kann es vorteilhaft sein, wenn die Breite kontinuierlich zu- oder abnimmt oder ein Minimum oder ein Maximum zwischen den Enden des mindestens einen Strahlleitelements aufweist, um eine Umströmung des mindestens einen Strahlleitelements zu optimieren.

Vorteilhaft ist es, wenn eine Länge des mindestens einen Strahlleitelements in Strömungsrichtung in einem Bereich liegt, welcher etwa dem 2-fachen bis etwa 15-fachen einer Breite des mindestens einen Strahlleitelements quer zur Strömungsrichtung entspricht, vorzugsweise etwa dem 5-fachen bis etwa 10-fachen. Strahlleitelemente, welche eine Länge in den angegebenen Bereichen aufweisen, sind hervorragend geeignet, um Längswirbel zu erzeugen, die ausreichend stabil sind, um in der oben beschriebenen, vorteilhaften Weise mit den an der Düsenaustrittskante generierten Ringwirbeln zu interferieren und die akustischen Verhältnisse im Windkanal zu verbessern.

Eine Windkanaldüse kann vereinfacht insbesondere in drei Segmente gegliedert werden, und zwar in einen am weitesten stromaufwärts angeordneten Bereich des Düseneintritts, einen mittleren Bereich der Kontraktion und einen stromabwärts von diesem befindlichen Bereich des nicht konvergenten Düsenaustritts. Vorteilhaft ist es, wenn eine Länge des mindestens einen Strahlleitelements in Strömungsrichtung in einem Bereich von etwa dem 0,5-fachen bis etwa dem 1,5-fachen der Länge des Bereichs des nicht konvergenten Düsenaustritts liegt, vorzugsweise in einem Bereich von etwa dem 0,75-fachen bis etwa dem 1,25-fachen der Länge des Bereichs des nicht konvergenten Düsenaustritts. In Windkanälen mit langer Freistrahlmessstrecke ist es günstig, wenn die Bildung der Längswirbel über eine hinreichend lange Strecke erfolgt, so dass diese die für das Zusammenwirken und Zerstören der an der Düsenaustrittskante generierten Ringwirbel ausreichende Stabilität aufweisen.

Günstig ist es, wenn eine Länge des mindestens einen Strahlleitelements in Strömungsrichtung in einem Bereich von etwa 1 m bis etwa 3 m liegt, vorzugsweise in einem Bereich von etwa 1,5 m bis etwa 2,5 m. Insbesondere in 1:1-Windkanälen mit einer entsprechend langen Freistrahlmessstrecke ist es günstig, wenn die Bildung der Längswirbel über eine hinreichend lange Strecke erfolgt, so dass diese die für das Zusammenwirken und Zerstören der an der Düsenaustrittskante generierten Ringwirbel ausreichende Stabilität aufweisen.

Vorteilhaft ist es, wenn die innere Düsenwand eine Bodenfläche, eine Deckenfläche und zwei Seitenwandflächen umfasst und wenn die Bodenfläche und/ oder die Deckenfläche und/oder die zwei Seitenwandflächen mindestens ein Strahlleitelement tragen. Die drei genannten Flächen werden, anders als die Bodenfläche durch den Boden im Plenum, stromabwärts der Düsenaustrittskante nicht fortgesetzt, so dass auch nur längs der Düsenaustrittskante, die an die genannten Flächen angrenzt, die die nachteiligen Wirbelablösungen entstehen können.

Ferner ist es vorteilhaft, wenn eine maximale Höhe des mindestens einen Strahlleitelements bezogen auf die innere Düsenwand in einem Bereich liegt, welcher etwa dem 0,01-fachen bis etwa 0,1-fachen einer Länge des mindestens einen Strahlleitelements parallel zur Strömungsrichtung, vorzugsweise etwa dem 0,02-fachen bis etwa 0,07-fachen, entspricht. Ist die maximale Höhe des Strahlleitelements zu hoch gewählt, können zu große oder zusätzliche Wirbel entstehen, die die gewünschte Formgebung des Freistrahls negativ beeinflussen.

Insbesondere in sogenannten 1:1-Windkanälen ist es vorteilhaft, wenn eine maximale Höhe des mindestens einen Strahlleitelements bezogen auf die innere Düsenwand in einem Bereich von etwa 0,05 m bis etwa 0,2 m liegt, vorzugsweise in einem Bereich von etwa 0,07 m bis etwa 0,14 m. Abmessungen des Strahlleitelements in den angegebenen Bereichen bieten ideale Bedingungen für die Ausbildung von Längswirbeln mit Rotationsachsen parallel zur Strömungsrichtung.

Günstig ist es, wenn die Leitfläche konvex und/oder konkav gewölbt ist. Beispielsweise kann sie von der Düsenwand weg weisend konkav gebildet sein, wenn das mindestens eine Strahlleitelement in Form einer Ausnehmung der Düsenwand ausgebildet ist. Ist das mindestens eine Strahlleitelement in Form eines Vorsprungs ausgebildet, kann die Leitfläche konvex gewölbt sein. In beiden Fällen kann sie optional sowohl konvexe als auch konkave Krümmungsabschnitte aufweisen. Durch eine entsprechende Formgebung der Leitfläche kann die Ausbildung von Längswirbeln in besonders vorteilhafter Weise gefördert und sichergestellt werden.

Vorteilhaft ist es, wenn die Leitfläche eine Krümmung mit einem Krümmungsradius in einem Bereich aufweist, welcher etwa dem 1,5-fachen bis etwa 3-fachen einer Länge des Strahlleitelements, vorzugsweise etwa dem 2 bis etwa 2,7-fachen, entspricht. Die Krümmung kann insbesondere konstant sein oder längs einer Erstreckung des mindestens einen Strahlleitelements in Längsrichtung variieren. Krümmungsradien in dem angegebenen Bereich ermöglichen eine besonders sanfte Verdrängung des Freistrahls in der Düse in Richtung auf eine Düsenlängsachse hin, und zwar ohne negative Beeinflussung desselben.

Besonders einfach ausbilden lässt sich das mindestens eine Strahlleitelement, wenn die Leitfläche in Form eines Ausschnitts einer Zylinderoberfläche ausgebildet ist.

Vorteilhaft ist es, wenn die Leitfläche in Form eines aerodynamisch optimierten Profils gekrümmt ist. So können besonders ideale Druckverhältnisse beim Durchströmen der Windkanaldüse realisiert werden. Ferner ist so beispielsweise eine verlustfreie beziehungsweise wenig verlustbehaftete Umströmung des mindestens einen Strahlleitelements erreichbar.

Die Ausbildung der Windkanaldüse wird besonders einfach, wenn das mindestens eine Strahlleitelement in Form eines aerodynamisch optimierten Vorsprungs oder einer aerodynamisch optimierter Vertiefung ausgebildet ist. Das mindestens eine Strahlleitelement kann also beispielsweise in Form eines Vorsprungs ausgebildet werden, so dass bestehende Windkanäle auf einfache Weise nachgerüstet werden können. Optional können neu erstellte Windkanäle mit Windkanaldüsen bereitgestellt werden, die als Strahlleitelemente beispielsweise auch entsprechende Vertiefungen aufweisen.

Vorteilhaft ist es, wenn der Vorsprung eine Deckseite umfasst, welche die Leitfläche definiert. Die Deckseite kann insbesondere in Form einer dünnen Wand ausgebildet sein. Alternativ kann der Vorsprung auch in Form eines massiven Körpers ausgebildet sein.

Günstig ist es, wenn der Vorsprung mindestens eine Ausnehmung aufweist. Insbesondere können auch zwei Ausnehmungen vorgesehen, die beispielsweise durch seitliche, strömungsgünstige Einzüge unterhalb der Leitfläche, die bis auf die ursprüngliche Düsenwand hinab reichen, das Volumen des Strahlleitelements verringern. Auf diese Weise ist es insbesondere möglich, den statischen Längsdruckgradienten in der Freistrahlmessstrecke nahezu unverändert zu belassen.

Insbesondere kann es vorteilhaft sein, wenn die mindestens eine Ausnehmung den Vorsprung quer zur Strömungsrichtung seitlich eröffnet. So kann beispielsweise eine Strömungsführung senkrecht oder quer zur Leitfläche erreicht werden, um den Längsdruckgradienten in der Freistrahlmessstrecke möglichst unverändert zu belassen.

Günstig kann es ferner sein, wenn das mindestens eine Strahlleitelement einen Hohlraum definiert, welcher quer zur Strömungsrichtung seitlich geöffnet und von der Deckseite und der inneren Düsenwand begrenzt ist. Beispielsweise lässt sich der Hohlraum ausbilden durch ein Strahlleitelement, welches nur in Form eines dünnen streifenförmigen Elements ausgebildet ist. So kann das Strahlleitelement unterhalb der Deckseite vollkommen hohl sein. Die Deckseite bildet auf diese Weise eine Art Brückenelement, das lediglich mit seinem stromaufwärts und stromabwärts gerichteten freien Ende mit der Düsenwand verbunden sein kann.

Besonders einfach herstellen lässt sich das Strahlleitelement, wenn es spiegelsymmetrisch bezogen auf eine sich parallel zur Strömungsrichtung und senkrecht zur Düsenwand erstreckenden Symmetrieebene ausgebildet ist. Ferner lässt sich so auch eine hochsymmetrische Anordnung mehrerer Strahlleitelemente an einer ebenfalls symmetrischen Windkanaldüse erreichen.

Die eingangs gestellte Aufgabe wird ferner bei einem Windkanal der eingangs beschriebenen Art erfindungsgemäß dadurch gelöst, dass der Windkanal eine der oben beschriebenen, in vorteilhafter Weise ausgebildeten Windkanaldüsen umfasst. Der Windkanal weist dann ebenfalls die oben im Zusammenhang mit vorteilhaften Ausführungsformen von mit Kanaldüsen beschriebenen Vorteile auf.

Die nachfolgende Beschreibung bevorzugter Ausführungsformen der Erfindung dient im Zusammenhang mit den Zeichnungen der näheren Erläuterung. Es zeigen:
- Figur 1:: eine schematische perspektivische Darstellung eines Grundrisses eines Windkanals Göttinger-Bauart mit offener Messstrecke;

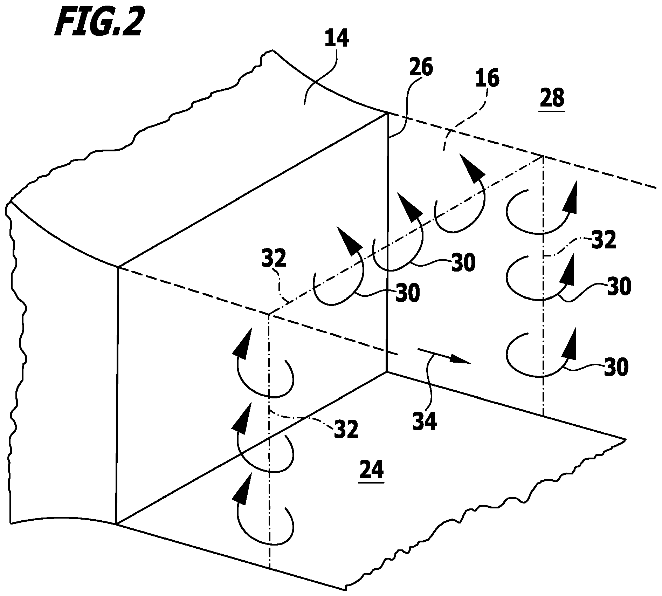

- Figur 2:: eine schematische Darstellung der Entstehung von Wirbelstrukturen in der Scherschicht eines Freistrahls nach Austritt aus der Windkanaldüse;
- Figur 3:: eine schematische perspektivische Darstellung einer Windkanaldüse mit einer Mehrzahl von an der inneren Düsenwand angeordneten streifenförmigen Strahlleitelementen;
- Figur 4:: eine ausschnittsweise Schnittansicht der Windkanaldüse mit einem Strahlleitelement;
- Figur 5a:: eine perspektivische Ansicht eines Strahlleitelements von oben mit einem aerodynamisch optimierten Profil;
- Figur 5b:: eine perspektivische Ansicht des in Figur 5a dargestellten Strahlleitelements von unten;
- Figur 5c:: eine Ansicht analog der Darstellung in Figur 5b eines weiteren Ausführungsbeispiels eines Strahlleitelements mit seitlichen Ausnehmungen; und
- Figur 5d:: eine Ansicht analog der Darstellung in Figur 5a eines weiteren Ausführungsbeispiels eines Strahlleitelements mit nicht konstanter Breite.

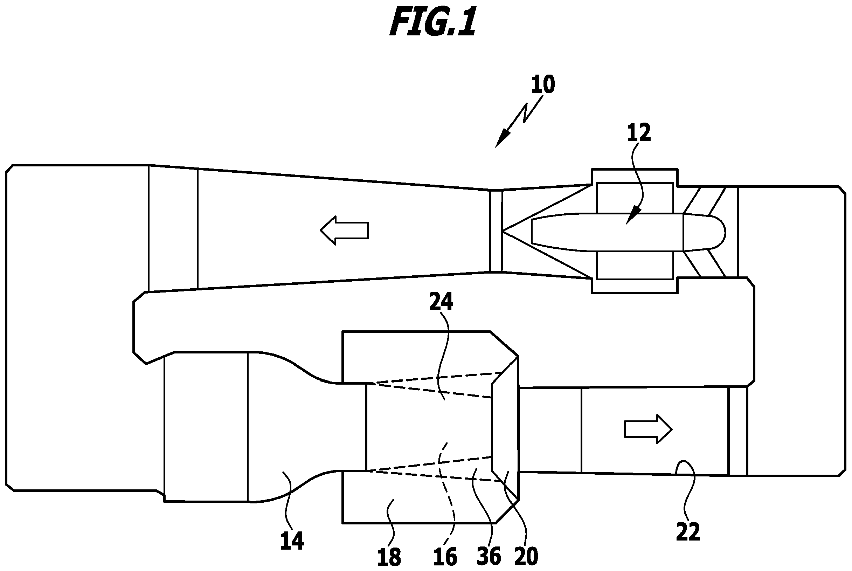

In Figur 1 ist schematisch der Grundriss eines Windkanals 10 Göttinger-Bauart dargestellt. Beim Windkanal 10 wird die Luft durch ein Gebläse 12 in einem geschlossen Kreislauf umgewälzt. Die Luft wird in definierter Weise aus der Windkanaldüse 14 zur Erzeugung eines schematisch in Figur 1 gestrichelt eingezeichneten Freistrahls 16 in das sogenannte Plenum 18 geleitet, in dem die aerodynamisch und/oder aeroakustisch zu vermessenden Gegenstände, beispielsweise Fahrzeuge, positioniert werden. Der Windkanal 10 weist somit eine offene Messstrecke 24 zwischen der Windkanaldüse 14 und dem Kollektor 20 auf, die auch als Freistrahlmessstrecke bezeichnet wird. Weist die Messstrecke 24 einen Messstreckenboden auf, wird die Messstrecke auch als ¾-offene Messstrecke bezeichnet.

Zur Bestimmung von auf die Gegenstände wirkenden Kräften in Folge der Anströmung durch den Freistrahl 16 ist üblicherweise im Messstreckenboden eine nicht näher dargestellte Windkanalwaage angeordnet, auf welcher die zu vermessenden Gegenstände positioniert werden. Der Freistrahl 16 wird mittels eines Kollektors 20 am stromabwärtigen Ende des Plenums 18 eingefangen und durch eine Luftrückführung 22 wieder zum Gebläse 12 geleitet.

Im Strömungsbetrieb eines Windkanals mit offener Messstrecke kommt es an der Düsenaustrittskante 26 der Windkanaldüse 14 zu einer natürlichen Wirbelbildung durch die Vermischung des Freistrahls 16, der aus der Windkanaldüse 14 austritt, und der ruhenden Umgebungsluft 28 längs der offenen Messstrecke 24. Bei dieser Vermischung entstehen Ringwirbel 30 mit Rotationsachsen 32, die senkrecht zur durch den Pfeil 34 angedeuteten Strömungsrichtung orientiert sind. Die Ringwirbel bewegen sich in einer zwischen dem Freistrahl 16 und der Umgebungsluft ausgebildeten Scherschicht 36 mit etwa 65% der Strömungsgeschwindigkeit des Strahlkerns des Freistrahls 16 in Richtung auf den Kollektor 20 hin. Während der Bewegung stromabwärts erfahren die Ringwirbel 30 eine räumliche Ausdehnung und deren Frequenzmaxima verlagern sich hin zu noch tieferen Frequenzen. Die Wirbel-Ablösefrequenz ist abhängig von den Abmessungen der Windkanaldüse, der Strömungsgeschwindigkeit sowie der Strouhal-Zahl.

Am Ende der Messstrecke 24 prallen die durch die Ringwirbel angeregten Wirbelstrukturen auf den Kollektor 20 beziehungsweise auf eine diesen umgebende, stromaufwärts weisende Wand des Plenums 18 und erzeugen dadurch eine Druckstörung, welche sich im Plenum 18 auch stromaufwärts verteilt. Kommt die Druckstörung am Düsenaustritt an, wird eine erneute Wirbelablösung bewirkt.

Die Luftführung des Windkanals 10 kann auch als ein offenes Rohr angesehen werden. In einem solchen System ist die Ausbildung von stehenden Wellen möglich. Ein Kennzeichen stehender Wellen sind ortsfeste Schalldruck-Knoten und Schalldruck-Bäuche in der Entfernung einer halben Wellenlänge. Die Windkanal-Eigenfrequenzen und deren harmonische Vielfache sind abhängig von der Umlauflänge des Windkanals 10 und der Schallgeschwindigkeit, nicht jedoch von der Strömungsgeschwindigkeit, wenn diese im Vergleich zur Schallgeschwindigkeit nicht allzu hoch ist.

Nähern sich, abhängig von der Strömungsgeschwindigkeit, die Wirbel-Ablösefrequenz und die Windkanal-Eigenfrequenzen an, kommt es zu Resonanzanregungen mit der Folge deutlicher Druckschwankungen sowohl im Plenum als auch in der Luftführung. Diese Pulsationen können das Strömungsgeräusch modulieren, was akustische Untersuchungen insbesondere an Fahrzeugen in den betroffenen Geschwindigkeitsbereichen stark beeinflusst. Auch die Ergebnisse aerodynamischer Bewertungen, beispielsweise an Fahrzeugen, können bei Geschwindigkeitsbereichen mit Resonanzerscheinungen verfälscht werden.

Aus diesen Gründen ist eine Vermeidung beziehungsweise eine Minimierung der Resonanzanregung wünschenswert.

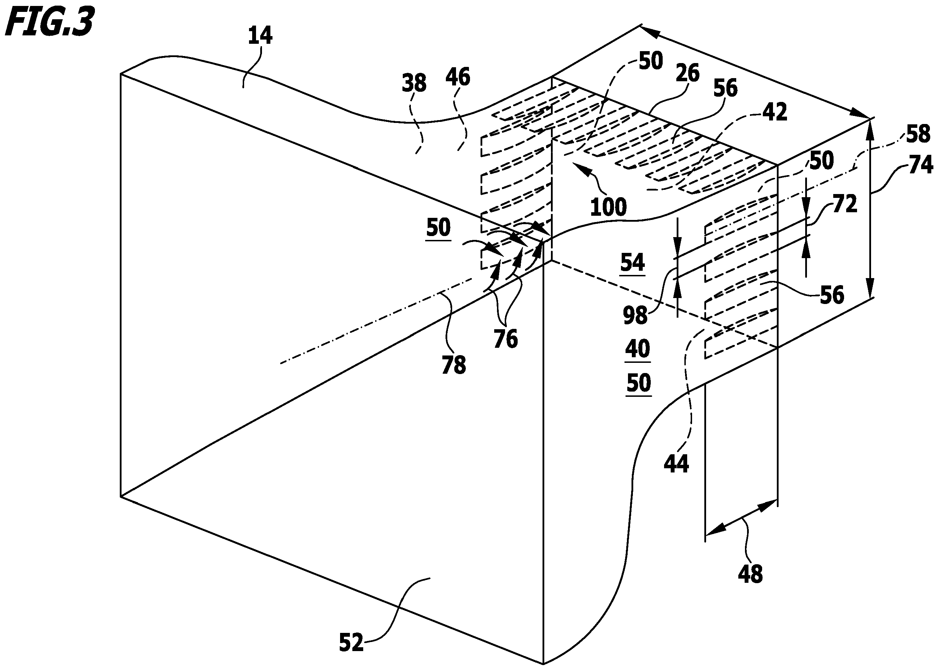

Hierzu werden, wie nachfolgend im Einzelnen erläutert, Strahlleitelemente an eine innere Düsenwand 38 der Windkanaldüse 14 angeordnet. Die innere Düsenwand 38 umfasst bei der schematisch in Figur 3 dargestellten Windkanaldüse 14 eine Bodenfläche 40, eine spiegelsymmetrisch zur dieser verlaufende Deckenfläche 42 sowie zwei spiegelsymmetrisch zueinander verlaufende und senkrecht zur Bodenfläche 40 und zur Deckenfläche 42 orientierte Seitenwandflächen 44 und 46. Die Windkanaldüse 14 weist somit einen rechteckigen Querschnitt auf, welcher über eine Länge 48 parallel zur Strömungsrichtung nicht konvergent beziehungsweise geringfügig divergent ist. Dies wird insbesondere dadurch erreicht, dass die Bodenfläche 40, die Deckenfläche 42 und die beiden Seitenwandflächen 44 und 46 jeweils einen ebenen, sich von der Düsenaustrittskante 26 stromaufwärts erstreckenden Düsenwandabschnitt 50 bilden, wobei jeweils zwei derselben parallel oder im Wesentlichen parallel zueinander ausgerichtet sind. Bei Windkanälen mit allseitig offener Messstrecke, d.h. die Messstrecke besitzt keinen Boden, gleicht die Düsenbodenfläche 40 der Deckenfläche 42 mit den vorgesehenen Strahlleitelementen.

Selbstverständlich ist es alternativ auch möglich, statt der beschriebenen Windkanaldüse 14 mit rechteckiger Düsenkontur eine Windkanaldüse mit halbrunder, runder oder vieleckiger, insbesondere achteckiger, Düsenkontur vorzusehen.

Die Windkanaldüse 14 weist ferner eine stromaufwärtsseitige Eintrittsfläche 52 auf, die etwa viermal so groß ist wie die von der Düsenaustrittskante 26 begrenzte Austrittsfläche 54. Insgesamt verjüngt sich somit die Windkanaldüse 14 in Strömungsrichtung zur Düsenaustrittskante 26 hin. Denkbar sind auch andere Werte für das Verhältnis zwischen der Eintrittsfläche 52 und der Austrittsfläche 54, das auch als Kontraktionsverhältnis bezeichnet wird, welche vorzugsweise in einem Bereich von etwas 2:1 bis etwa 20:1 liegen.

Um nun die unerwünschten kohärenten Wirbelstrukturen, die durch die sich ablösenden Ringwirbel 30 verursacht wird, aufzubrechen, werden an den beiden Seitenwandflächen 44 und 46 sowie an der Deckenfläche 42 jeweils mehrere Strahlleitelemente 56 angeordnet. Diese definieren jeweils eine Längsachse 58, die parallel zur Strömungsrichtung 34 orientiert ist. Die Strahlleitelemente 56 sind alle identisch ausgebildet und regelmäßig auf den genannten Flächen angeordnet. Sie sind in Form von Streifen ausgebildet, welche eine von der Düsenwand 38 vorspringende Deckseite 60 umfassen, welche eine von der Düsenwand 38 weg weisende Leitfläche 62 definiert. Die Strahlleitelemente 56 sind derart angeordnet, dass ein stromabwärts weisendes Ende 64 direkt in die Düsenaustrittskante 26 übergeht. Mit anderen Worten reicht jedes Strahlleitelement 56 mit seinem Ende 64 bis an die Düsenaustrittskante 26 heran. Eine Länge 68 des Strahlleitelements 56 wird definiert als Abstand zwischen dem Ende 64 und einem stromaufwärts gerichteten Ende 66 des Strahlleitelements 56. Grundsätzlich wäre es optional auch denkbar, dass ein Teil der Strahlleitelemente 56 oder sogar alle derart ausgebildet und/oder angeordnet sind, dass sie, zumindest etwas, über die Düsenaustrittskante 26 hinaus in das Plenum 18 hinein vorstehen.

Vorteilhafterweise weist die Leitfläche 62 ein Abstandsprofil auf, das heißt einen in Abhängigkeit eines Abstands von der Düsenaustrittskante 26 abhängigen Abstand von der Düsenwand 38. Ein Abstand der Leitfläche 62 an den Enden 64 und 66 von der Düsenwand 38 beträgt jeweils Null. Ein maximaler Abstand 70 der Leitfläche 62 von der Düsenwand 38 liegt vorzugsweise in einem Bereich von etwa 0,05 m bis 0,2 m. Günstig ist es, wenn der Abstand 70, auch als maximale Höhe des mindestens einen Strahlleitelements 56 bezeichnet, in einem Bereich von 0,07 m bis etwa 0,14 m liegt.

Eine Breite 72 des mindestens einen Strahlleitelements 56 quer zur Strömungsrichtung liegt bei Einsatz in einem 1:1 Fahrzeugwindkanal vorteilhafterweise in einem Bereich von etwa 0,15 m bis 0,5 m. Günstig ist es, wenn die Breite 72 in einem Bereich von etwa 0,2 m bis etwa 0,4 m liegt.

Vorteilhaft ist es, wenn die Breite 72 des Strahlleitelements 56 auf eine Höhe 74 der Windkanaldüse 14 bezogen wird. Günstig ist es, wenn die Breite 72 etwa dem 0,05-fachen bis etwa 0,2-fachen der Höhe 74 entspricht, vorzugsweise etwa 0,08-fachen bis etwa 0,15-fachen. Die Länge 68 des Strahlleitelementes 56 liegt bei Einsatz in einem typischen 1:1 Fahrzeugwindkanal vorteilhafterweise in einem Bereich von etwa 1 m bis etwa 3 m. Günstig ist es, wenn sie in einem Bereich von etwa 1,5 m bis 2,5 m liegt. Bezogen auf die Breite 72 ist es günstig, wenn die Länge 68 etwa dem 2-fachen bis etwa 15-fachen der Breite 72 entspricht, vorzugsweise etwa dem 5-fachen bis etwa 10-fachen.

Des Weiteren ist es vorteilhaft, wenn der Abstand 70 oder die maximale Höhe des Strahlleitelements 56 auf die Länge 68 bezogen wird und etwa dem 0,01-fachen bis etwa 0,1-fachen derselben entspricht, vorzugsweise etwa dem 0,02-fachen bis etwa 0,07-fachen.

Die Strahlleitelemente 56 dienen dazu, definierte Längswirbel 76 zu erzeugen, die eine Rotationsachse 78 aufweisen, die senkrecht zu den Rotationsachsen 32 der Ringwirbel 30 orientiert sind. An der Düsenwand 38 bilden sich aufgrund statischer Druckunterschiede zwischen den Bereichen, an denen Strahlleitelemente 56 angeordnet sind, und den Bereichen zwischen diesen definierte Längswirbel 76, die mit dem Strahl stromabwärts bewegt werden und aufgrund ihrer Orientierung beim Austritt aus der Windkanaldüse 14 die Ringwirbel 30 aufbrechen oder zumindest so weit zerstören, dass die oben beschriebene Resonanzanregung minimiert oder ganz verhindert werden kann.

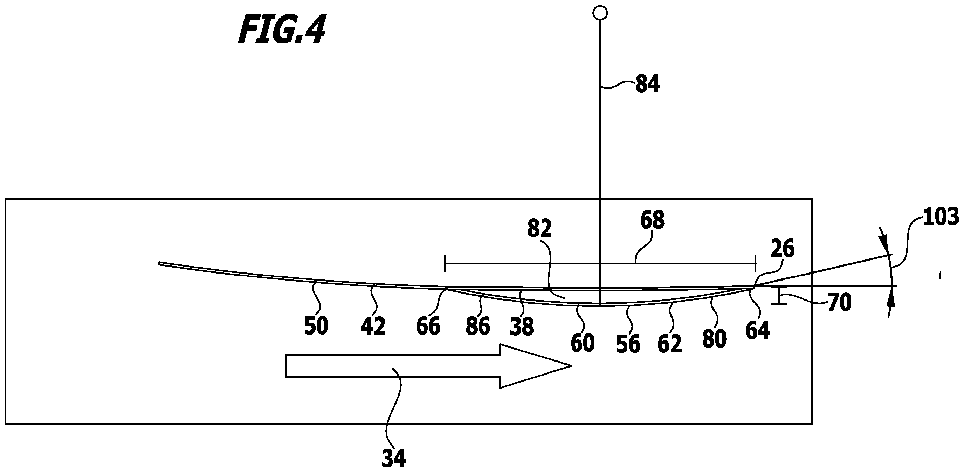

Die Strahlleitelemente 56 können in verschiedenen Varianten ausgebildet werden. In Figur 4 ist beispielsweise ein Strahlleitelement 56 dargestellt, welches beispielsweise durch ein streifenförmiges Blech, welches eine Deckseite 80 bildet, ausgebildet sein. Zwischen der Deckseite 80 und der Düsenwand 38 ist ein Hohlraum 82 ausgebildet. Das Strahlleitelement 56, wie es in Figur 4 schematisch dargestellt ist, kann optional auch massiv ausgebildet sein. Die Leitfläche 62 weist einen konstanten Krümmungsradius 84 auf, welcher etwa dem 1,5-fachen bis etwa 3-fachen der Länge 68 des Strahlleitelements 56 entspricht. Somit bildet die Leitfläche 56 bei der in Figur 4 schematisch dargestellten Variante des Strahlleitelements 56 einen Ausschnitt einer Zylinderoberfläche 86.

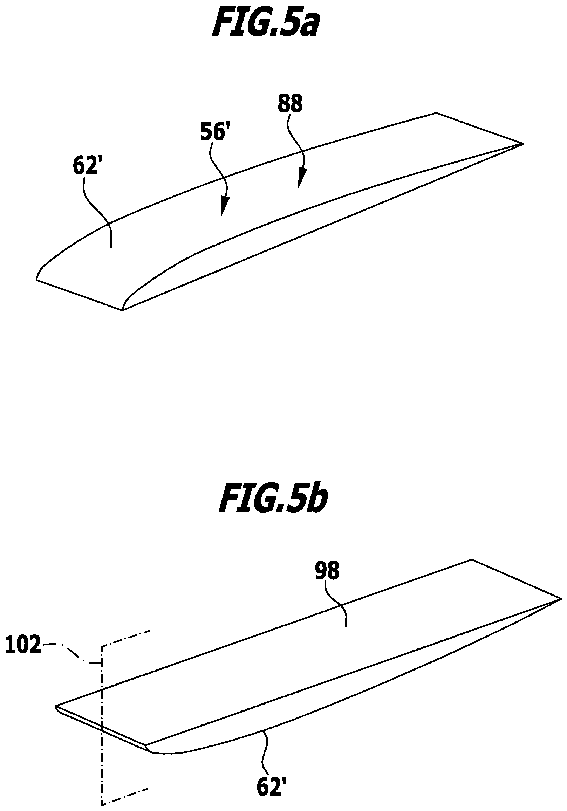

Alternativ kann, wie schematisch in den Figuren 5a und 5b dargestellt, das Strahlleitelement 56 auch in Form eines massiven aerodynamisch optimierten Profils 88 ausgebildet sein, welches eine Leitfläche 56' definiert, die der Leitfläche 56 entspricht.

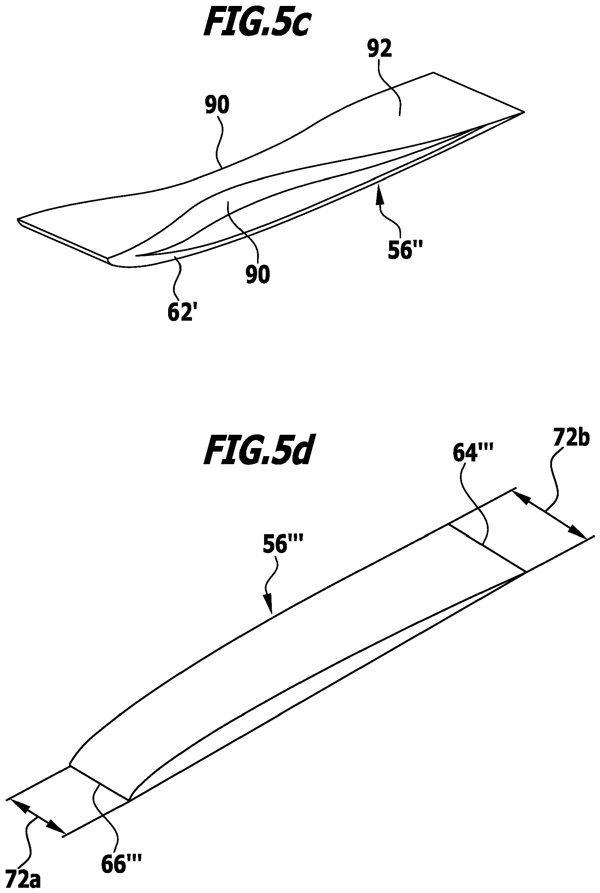

Wie bereits beim in Figur 4 dargestellten Strahlleitelement 56 beschrieben, kann unter der Leitfläche 62 ein Hohlraum 82 ausgebildet sein. Denkbar ist es auch, wie schematisch in Figur 5c dargestellt, die massiven Strahlleitelemente 56' zusätzlich mit seitlichen Ausnehmungen 90 auf deren Unterseite 92 zu versehen. Die wirksame Kontur der Leitfläche 62' entspricht dabei derjenigen des Strahlleitelements 56'. Durch die Ausnehmungen 90 wird jedoch das Volumen des Strahlleitelements 56 durch die strömungsgünstigen Ausnehmungen 90 minimiert. Auf diese Weise ist es speziell bei Integration in bestehenden Windkanälen möglich, den statischen Längsdruckgradienten längs der Messstrecke 24 nahezu unverändert zu belassen. Dies ist insbesondere für Fahrzeugwindkanäle bei Messungen der am Fahrzeug angreifenden Kräfte wünschenswert. Insbesondere vor und hinter dem Messobjekt sollte der Windkanal möglichst keinen Einfluss auf den statischen Druckverlauf haben.

Ferner kann auch die Breite 72 wie schematisch in Figur 5d bei einem weiteren Ausführungsbeispiel eines Strahlleitelements 56''' dargestellt in Längsrichtung variieren. So kann die Breite 72a am Ende 66''' kleiner sein als am Ende 64'" oder auch umgekehrt und sich zwischen den Enden 66'" und 64'" kontinuierlich ändern oder ein Minimum oder ein Maximum aufweisen.

Die Strahlleitelemente 56, 56', 56" und 56''' sind spiegelsymmetrisch bezogen auf eine sich parallel zur Strömungsrichtung und senkrecht zur Düsenwand 38 erstreckenden Symmetrieebene 102 ausgebildet. Sie bilden jeweils eine Einrichtung 100 zum Aufbrechen einer kohärenten Wirbelstruktur des aus der Windkanaldüse 14 austretenden Freistrahls 16. Vorzugsweise liegt ein Abstand 98 benachbarter Strahlleitelemente 56 in einem Bereich, welcher etwa dem 0,5-fachen bis etwa dem 3-fachen der Breite 72 der Strahlleitelemente 56 quer zur Strömungsrichtung, vorzugsweise etwa dem 0,8-fachen bis etwa dem 2-fachen, entspricht.

Mit den beschriebenen Strahlleitelementen 56 an der Düsenwand 38 stromaufwärts der Düsenaustrittskante 26 ist es möglich, die Resonanzanregungen am Entstehungsort zu unterbinden, anstatt deren Folgen mit vergleichsweise hohem technischen Aufwand zu mindern, wie beispielsweise in der EP 0 894 253 B1 beschrieben. Mit einer Windkanaldüse 14 mit Strahlleitelementen 56, 56' oder 56" kann mit geringem konstruktiven Aufwand effektiv der Anregemechanismus zur Resonanzausbildung verhindert oder zumindest gestört werden, und zwar ohne größeren baulichen Eingriff im Windkanal und ohne zusätzliche Generierung von Eigengeräuschen. Insbesondere ist es möglich, bestehende Windkanäle einfach und kostengünstig nachzurüsten. Die Strahlleitelemente können insbesondere aus Kunststoff, beispielsweise Polystyrol-Hartschaum, aus Glasfaserverstärktem Kunststoff, aus Kohlefaserverstärktem Kunststoff oder auch aus Metall, insbesondere Blechen, ausgebildet sein.

Die vorgeschlagenen Strahlleitelemente 56 haben insbesondere gegenüber den häufig in Fahrzeugwindkanälen verwendeten Seiferth-Flügeln den Vorteil, dass kein zusätzlicher Schalleintrag durch Eigengeräusche generiert wird. Die mittels der Strahlleitelemente 56 erzeugten Längswirbel 76 wirken dabei als zusätzliche Stabilisierung der Freistrahl-Scherschicht, was die Einströmsituation am Kollektor 20 akustisch vorteilhaft verändern kann und somit zu einer Verringerung der Aufprallgeräusche führt.

Die Wirkungsweise der Strahlleitelemente 56, 56', 56" und 56''' sowie auch aller eingangs beschriebenen bevorzugten Ausführungsformen von Strahlleitelementen kann insbesondere durch zwei Effekte erklärt werden: zum einen wird durch die Überströmung der Strahlleitelemente 56, 56', 56" und 56''' ein Abströmwinkel 103 am Düsenaustritt lokal verändert und dadurch die Gleichförmigkeit der natürlichen Wirbelablösung an der Düsenaustrittskante 26 und der der Freistrahl-Scherschicht aufgebrochen. Zum anderen bilden sich beim Überströmvorgang der Leitfläche 62 sowie der Leitfläche 62', ohne und mit seitlichen Ausnehmungen, stabile Längswirbel an den Längskanten der Strahlleitelemente 56, 56', 56" und 56''' in Strömungsrichtung. Als Folge werden die durch die Ringwirbel 30 ausgebildeten kohärenten Ringwirbelstrukturen am Düsenaustritt effektiv gestört und ein Anfachen der Resonanzanregung wird weitgehend verhindert.

## Patentansprüche

1. Windkanaldüse (14) für einen Windkanal (10), insbesondere für einen Fahrzeugwindkanal, welche eine Strömungsrichtung definiert, mit einer inneren Düsenwand (38) und einer Düsenaustrittskante (26), wobei ferner eine Einrichtung (100) zum Aufbrechen kohärenter Wirbelstrukturen eines aus der Windkanaldüse (14) austretenden Freistrahls (16) vorgesehen ist, wobei die Einrichtung (100) mindestens ein an der inneren Düsenwand (38) angeordnetes oder ausgebildetes, sich in Strömungsrichtung erstreckendes und eine Breite (72) quer zur Strömungsrichtung aufweisendes Strahlleitelement (56) umfasst, welches eine von der Düsenwand (38) vorspringende oder gegenüber dieser zurückgesetzte und von dieser weg weisende Leitfläche (62) aufweist, wobei die Leitfläche (62) ein Abstandsprofil aufweist, wobei ein Abstand (70) eines stromaufwärts gerichteten Endes (66) des mindestens einen Strahlleitelements (56) von der Düsenwand (38) Null oder im Wesentlichen Null beträgt und wobei ein Abstand eines stromabwärts gerichteten Endes (64) des Strahlleitelements (56) von der Düsenaustrittskante (26) Null oder im Wesentlichen Null beträgt, **dadurch gekennzeichnet, dass** ein Abstand (70) des stromabwärts gerichteten Endes (64) des mindestens einen Strahlleitelements (56) von der Düsenwand (38) Null oder im Wesentlichen Null beträgt.

2. Windkanaldüse nach Anspruch 1, **dadurch gekennzeichnet, dass**
a) das mindestens eine Strahlleitelement (56) eine Längsrichtung definiert, welche sich parallel zur Strömungsrichtung erstreckt,
und/oder
b) die Windkanaldüse (14) eine Mehrzahl von Strahlleitelementen (56) umfasst,
welche Strahlleitelemente (56) insbesondere parallel zueinander und/oder insbesondere äquidistant angeordnet sind,
wobei weiter insbesondere ein Abstand (98) benachbarter Strahlleitelemente (56) in einem Bereich liegt, welcher etwa dem 0,5-fachen bis etwa dem 3-fachen einer Breite (72) der Strahlleitelemente (56) quer zur Strömungsrichtung entspricht,
weiter insbesondere etwa dem 0,8-fachen bis etwa dem 2-fachen der Breite (72) entspricht.

3. Windkanaldüse nach einem der voranstehenden Ansprüche, **gekennzeichnet durch** einen runden, halbrunden, vieleckigen, insbesondere rechteckigen, Querschnitt,
wobei insbesondere die Windkanaldüse vier ebene, sich von der Düsenaustrittkante (26) stromaufwärts erstreckende Düsenwandabschnitte (50) umfasst,
wobei weiter insbesondere jeweils zwei Düsenwandabschnitte (50) parallel oder im Wesentlichen parallel zueinander ausgerichtet sind.

4. Windkanaldüse nach einem der voranstehenden Ansprüche, **dadurch gekennzeichnet, dass** eine Breite (72) des mindestens einen Strahlleitelements (56) quer zur Strömungsrichtung in einem Bereich liegt, welcher etwa dem 0,05-fachen bis etwa 0,2-fachen einer Höhe (74) der Windkanaldüse (14) entspricht,
insbesondere etwa dem 0,08-fachen bis etwa 0,15-fachen.

5. Windkanaldüse nach einem der voranstehenden Ansprüche, **dadurch gekennzeichnet, dass**
a) eine Breite (72) des mindestens einen Strahlleitelements (56) quer zur Strömungsrichtung in einem Bereich von etwa 0,15 m bis etwa 0,5 m liegt, vorzugsweise in einem Bereich von etwa 0,2 m bis etwa 0,4 m,
und/oder
b) eine Breite (72a, 72b) des mindestens einen Strahlleitelements (56''') quer zur Strömungsrichtung variiert,
insbesondere kontinuierlich zu- oder abnimmt oder ein Minimum oder ein Maximum zwischen Enden (64"', 66"') des mindestens einen Strahlleitelements (56''') aufweist.

6. Windkanaldüse nach einem der voranstehenden Ansprüche, **dadurch gekennzeichnet, dass**
a) eine Länge (68) des mindestens einen Strahlleitelements (56) in Strömungsrichtung in einem Bereich liegt, welcher etwa dem 2-fachen bis etwa 15-fachen einer Breite (72) des mindestens einen Strahlleitelements (56) quer zur Strömungsrichtung entspricht, insbesondere etwa dem 5-fachen bis etwa 10-fachen,
und/oder
b) eine Länge (68) des mindestens einen Strahlleitelements (56) in Strömungsrichtung in einem Bereich von etwa dem 0,5-fachen bis etwa dem 1,5-fachen der Länge (48) des Bereichs des nicht konvergenten Düsenaustritts liegt,
insbesondere in einem Bereich von etwa dem 0,75-fachen bis etwa dem 1,25-fachen der Länge (48) des Bereichs des nicht konvergenten Düsenaustritts.

7. Windkanaldüse nach einem der voranstehenden Ansprüche, **dadurch gekennzeichnet, dass**
a) eine Länge (68) des mindestens einen Strahlleitelements (56) in Strömungsrichtung in einem Bereich von etwa 1 m bis etwa 3 m liegt,
insbesondere in einem Bereich von etwa 1,5 m bis etwa 2,5 m,
und/oder
b) die innere Düsenwand (38) eine Bodenfläche (40), eine Deckenfläche (42) und zwei Seitenwandflächen (44) umfasst und dass die Bodenfläche (40) und/oder die Deckenfläche (42) und/oder die zwei Seitenwandflächen (44) mindestens ein Strahlleitelement (56) tragen
und/oder
c) eine maximale Höhe (70) des mindestens einen Strahlleitelements (56) bezogen auf die innere Düsenwand (38) in einem Bereich liegt, welcher etwa dem 0,01-fachen bis etwa 0,1-fachen einer Länge (68) des mindestens einen Strahlleitelements (56) parallel zur Strömungsrichtung entspricht,
insbesondere etwa dem 0,02-fachen bis etwa 0,07-fachen,
und/oder
d) eine maximale Höhe (70) des mindestens einen Strahlleitelements (56) bezogen auf die innere Düsenwand (38) in einem Bereich von etwa 0,05 m bis etwa 0,2 m liegt,
insbesondere in einem Bereich von etwa 0,07 m bis etwa 0,14 m,
und/oder
e) die Leitfläche (62) konvex und/oder konkav gewölbt ist.

8. Windkanaldüse nach einem der voranstehenden Ansprüche, **dadurch gekennzeichnet, dass** die Leitfläche (62) eine Krümmung mit einem Krümmungsradius (84) in einem Bereich aufweist, welcher etwa dem 1,5-fachen bis etwa 3-fachen einer Länge des mindestens einen Strahlleitelements (56),
vorzugsweise etwa dem 2 bis 2,7-fachen, entspricht.

9. Windkanaldüse nach einem der voranstehenden Ansprüche, **dadurch gekennzeichnet, dass** die Leitfläche (62) in Form eines Ausschnitts einer Zylinderoberfläche (86) ausgebildet ist.

10. Windkanaldüse nach einem der voranstehenden Ansprüche, **dadurch gekennzeichnet, dass** die Leitfläche (62') in Form eines aerodynamisch optimierten Profils (88) gekrümmt ist.

11. Windkanaldüse nach einem der voranstehenden Ansprüche, **dadurch gekennzeichnet, dass** das mindestens eine Strahlleitelement (56) in Form eines aerodynamisch optimierten Vorsprungs oder einer aerodynamisch optimierten Vertiefung ausgebildet ist,
insbesondere umfasst der Vorsprung eine Deckseite (80), welche die Leitfläche (62) definiert.

12. Windkanaldüse nach Anspruch 11, **dadurch gekennzeichnet, dass** der Vorsprung mindestens eine Ausnehmung (90) aufweist, insbesondere eröffnet die mindestens eine Ausnehmung (90) den Vorsprung quer zur Strömungsrichtung seitlich.

13. Windkanaldüse nach einem der voranstehenden Ansprüche, **dadurch gekennzeichnet, dass** das mindestens eine Strahlleitelement (56) einen Hohlraum (82) definiert, welcher quer zur Strömungsrichtung seitlich geöffnet und von der Deckseite (80) und der inneren Düsenwand (38) begrenzt ist.

14. Windkanaldüse nach einem der voranstehenden Ansprüche, **dadurch gekennzeichnet, dass** das Strahlleitelement (56; 56'; 56"; 56"') spiegelsymmetrisch bezogen auf eine sich parallel zur Strömungsrichtung und senkrecht zur Düsenwand (38) erstreckenden Symmetrieebene (102) ausgebildet ist.

15. Windkanal (10), insbesondere ein Windkanal für aeroakustische Messungen mit geschlossener Luftführung, umfassend eine Windkanaldüse (14) nach einem der voranstehenden Ansprüche.

## Claims

1. Wind tunnel nozzle (14) for a wind tunnel (10), in particular for a vehicle wind tunnel, which defines a flow direction, having an inner nozzle wall (38) and a nozzle outlet edge (26), wherein furthermore a device (100) for breaking up coherent eddy structures of a free jet (16) emerging from the wind tunnel nozzle (14) is provided, wherein the device (100) comprises at least one jet guiding element (56) arranged or formed on the inner nozzle wall (38), extending in the flow direction and having a width (72) transversely to the flow direction, said guiding element comprising a guiding surface (62) protruding from the nozzle wall (38) or set back relative thereto and facing away therefrom, wherein the guiding surface (62) has a spacing profile, wherein a spacing (70) of an upstream-facing end (66) of the at least one jet guiding element (56) from the nozzle wall (38) is zero or substantially zero and wherein a spacing of a downstream-facing end (64) of the jet guiding element (56) from the nozzle outlet edge (26) is zero or substantially zero, **characterised in that** a spacing (70) of the downstream-facing end (64) of the at least one jet guiding element (56) from the nozzle wall (38) is zero or substantially zero.

2. Wind tunnel nozzle according to claim 1, **characterised in that**
a) the at least one jet guiding element (56) defines a longitudinal direction which extends parallel to the flow direction,
and/or
b) the wind tunnel nozzle (14) comprises a plurality of jet guiding elements (56),
which jet guiding elements (56) are arranged in particular parallel to one another and/or in particular equidistant,
wherein further in particular a spacing (98) of adjacent jet guiding elements (56) lies in a range which corresponds to approximately 0.5 times to approximately 3 times a width (72) of the jet guiding elements (56) transversely to the flow direction,
which further in particular corresponds to approximately 0.8 times to approximately 2 times said width (72).

3. Wind tunnel nozzle according to one of the preceding claims,
**characterised by** a round, half round, polygonal, in particular rectangular, cross-section,
wherein in particular the wind tunnel nozzle comprises four planar nozzle wall portions (50) which extend in an upstream direction from the nozzle outlet edge (26),
wherein further in particular two nozzle wall portions (50) are each oriented parallel or substantially parallel to one another.

4. Wind tunnel nozzle according to one of the preceding claims,
**characterised in that** a width (72) of the at least one jet guiding element (56) transversely to the flow direction lies in a range which corresponds to approximately 0.05 times to approximately 0.2 times a height (74) of the wind tunnel nozzle (14),
in particular approximately 0.08 times to approximately 0.15 times.

5. Wind tunnel nozzle according to one of the preceding claims,
**characterised in that**
a) a width (72) of the at least one jet guiding element (56) transversely to the flow direction lies in a range from approximately 0.15 m to approximately 0.5 m, preferably in a range from approximately 0.2 m to approximately 0.4 m,
and/or
b) a width (72a, 72b) of the at least one jet guiding element (56"') transversely to the flow direction varies,
in particular continuously increases or decreases or has a minimum or a maximum between ends (64''', 66''') of the at least one jet guiding element (56''').

6. Wind tunnel nozzle according to one of the preceding claims,
**characterised in that**
a) a length (68) of the at least one jet guiding element (56) in the flow direction lies in a range which corresponds to approximately 2 times to approximately 15 times a width (72) of the at least one jet guiding element (56) transversely to the flow direction, in particular approximately 5 times to approximately 10 times,
and/or
b) a length (68) of the at least one jet guiding element (56) in the flow direction lies in a range of approximately 0.5 times to approximately 1.5 times the length (48) of the region of the non-convergent nozzle outlet,
in particular in a range from approximately 0.75 times to approximately 1.25 times the length (48) of the region of the non-convergent nozzle outlet.

7. Wind tunnel nozzle according to one of the preceding claims, **characterised in that**
a) a length (68) of the at least one jet guiding element (56) in the flow direction lies in a range from approximately 1 m to approximately 3 m,
in particular in a range from approximately 1.5 m to approximately 2.5 m,
and/or
b) the inner nozzle wall (38) comprises a bottom surface (40), a top surface (42) and two side wall surfaces (44) and **in that** the bottom surface (40) and/or the top surface (42) and/or the two side wall surfaces (44) support at least one jet guiding element (56),
and/or
c) a maximum height (70) of the at least one jet guiding element (56) relative to the inner nozzle wall (38) lies in a range with corresponds to approximately 0.01 times to approximately 0.1 times a length (68) of the at least one jet guiding element (56) parallel to the flow direction,
in particular approximately 0.02 times to approximately 0.07 times,
and/or
d) a maximum height (70) of the at least one jet guiding element (56) relative to the inner nozzle wall (38) lies in a range from approximately 0.05 m to approximately 0.2 m,
in particular in a range from approximately 0.07 m to approximately 0.14 m,
and/or
e) the guiding surface (62) is convexly and/or concavely curved.

8. Wind tunnel nozzle according to one of the preceding claims,
**characterised in that** the guiding surface (62) has a curvature with a radius of curvature (84) in a range which corresponds to approximately 1.5 times to approximately 3 times a length of the at least one jet guiding element (56),
preferably approximately 2 times to 2.7 times.

9. Wind tunnel nozzle according to one of the preceding claims,
**characterised in that** the guiding surface (62) is configured in the form of a portion of a cylindrical surface (86).

10. Wind tunnel nozzle according to one of the preceding claims,
**characterised in that** the guiding surface (62') is curved in the form of an aerodynamically optimised profile (88).

11. Wind tunnel nozzle according to one of the preceding claims,
**characterised in that** the at least one jet guiding element (56) is configured in the form of an aerodynamically optimised protrusion or an aerodynamically optimised indentation,
in particular the protrusion comprises a top side (80) which defines the guiding surface (62).

12. Wind tunnel nozzle according to claim 11, **characterised in that** the protrusion comprises at least one recess (90), in particular the at least one recess (90) opens the protrusion laterally transversely to the flow direction.

13. Wind tunnel nozzle according to one of the preceding claims,
**characterised in that** the at least one jet guiding element (56) defines a hollow space (82) which is open laterally transversely to the flow direction and is delimited by the top side (80) and the inner nozzle wall (38).

14. Wind tunnel nozzle according to one of the preceding claims,
**characterised in that** the jet guiding element (56; 56'; 56"; 56"') is formed mirror-symmetrical in relation to a plane of symmetry (102) extending parallel to the flow direction and perpendicularly to the nozzle wall (38).

15. Wind tunnel (10), particularly a wind tunnel for aeroacoustic measurements with closed air guidance, comprising a wind tunnel nozzle (14) according to one of the preceding claims.

## Revendications

1. Buse de soufflerie (14) pour une soufflerie (10), en particulier pour une soufflerie de véhicule, laquelle définit une direction d'écoulement, avec une paroi de buse (38) intérieure et un bord de sortie de buse (26), dans laquelle, en outre, un dispositif (100) destiné à fracturer des structures tourbillonnaires cohérentes d'un jet libre (16) sortant de la buse de soufflerie (14) est prévu, dans laquelle le dispositif (100) comprend au moins un élément de guidage de jet (56) disposé ou réalisé sur la paroi de buse (38) intérieure, s'étendant dans la direction d'écoulement et présentant une largeur (72) transversale à la direction d'écoulement, lequel présente une surface de guidage (62) faisant saillie de la paroi de buse (38) ou en retrait par rapport à celle-ci et orientée du côté opposé à celle-ci, dans laquelle la surface de guidage (62) présente un profil d'écartement, dans laquelle un écart (70) entre une extrémité (66), dirigée en amont, de l'au moins un élément de guidage de jet (56) et la paroi de buse (38) est égal à zéro ou sensiblement à zéro, et dans laquelle un écart entre une extrémité (64), dirigée vers l'aval, de l'élément de guidage de jet (56) et le bord de sortie de buse (26) est égal à zéro ou sensiblement zéro, **caractérisée en ce qu'**un écart (70) entre l'extrémité (64) dirigée vers l'aval de l'au moins un élément de guidage de jet (56) et la paroi de buse (38) est égal à zéro ou sensiblement à zéro.

2. Buse de soufflerie selon la revendication 1, **caractérisée en ce que**
a) l'au moins un élément de guidage de jet (56) définit une direction longitudinale, laquelle s'étend parallèlement à la direction d'écoulement,
et/ou
b) la buse de soufflerie (14) comprend une pluralité d'éléments de guidage de jet (56),
lesquels éléments de guidage de jet (56) sont disposés en particulier parallèlement les uns aux autres et/ou en particulier de manière équidistante,
dans laquelle plus particulièrement un écart (98) entre des éléments de guidage de jet (56) voisins se situe dans une plage, laquelle correspond environ à 0,5 fois à environ 3 fois une largeur (72) des éléments de guidage de jet (56) transversalement à la direction d'écoulement,
correspond plus particulièrement environ à 0,8 fois à environ 2 fois la largeur (72).

3. Buse de soufflerie selon l'une quelconque des revendications précédentes, **caractérisée par** une section transversale ronde, demi-circulaire, polygonale, en particulier rectangulaire,
dans laquelle en particulier la buse de soufflerie comprend quatre parties de paroi de buse (50) plates, s'étendant en amont à partir du bord de sortie de buse (26),
dans laquelle plus particulièrement respectivement deux parties de paroi de buse (50) sont orientées parallèlement ou sensiblement parallèlement l'une à l'autre.

4. Buse de soufflerie selon l'une quelconque des revendications précédentes, **caractérisée en ce qu'**une largeur (72) de l'au moins un élément de guidage de jet (56) se situe transversalement à la direction d'écoulement dans une plage, laquelle correspond environ à 0,05 fois à environ 0,2 fois une hauteur (74) de la buse de soufflerie (14),
en particulier environ à 0,08 fois à environ 0,15 fois.

5. Buse de soufflerie selon l'une quelconque des revendications précédentes, **caractérisée en ce que**
a) une largeur (72) de l'au moins un élément de guidage de jet (56) transversalement à la direction d'écoulement se situe dans une plage d'environ 0,15 m à environ 0,5 m, de préférence dans une plage d'environ 0,2 m à environ 0,4 m,
et/ou
b) **en ce qu'**une largeur (72a, 72b) de l'au moins un élément de guidage de jet (56''') varie transversalement à la direction d'écoulement,
en particulier augmente ou diminue en continu ou présente un minimum ou un maximum entre des extrémités (64''', 66''') de l'au moins un élément de guidage de jet (56''').

6. Buse de soufflerie selon l'une quelconque des revendications précédentes, **caractérisée en ce que**
a) une longueur (68) de l'au moins un élément de guidage de jet (56) dans la direction d'écoulement se situe dans une plage, laquelle correspond environ à 2 fois jusqu'à 15 fois une largeur (72) de l'au moins un élément de guidage de jet (56) transversalement à la direction d'écoulement,
en particulier à environ 5 fois à environ 10 fois,
et/ou
b) une longueur (68) de l'au moins un élément de guidage de jet (56) dans la direction d'écoulement se situe dans une plage d'environ 0,5 fois à environ 1,5 fois la longueur (48) de la zone de la sortie de buse non convergente,
en particulier dans une plage d'environ 0,75 fois à environ 1,25 fois la longueur (48) de la zone de la sortie de buse non convergente.

7. Buse de soufflerie selon l'une quelconque des revendications précédentes, **caractérisée en ce que**
a) une longueur (68) de l'au moins un élément de guidage de jet (56) dans la direction d'écoulement se situe dans une plage d'environ 1 m à environ 3 m,
en particulier dans une plage d'environ 1,5 m à environ 2,5 m, et/ou
b) la paroi de buse (38) intérieure comprend une surface de fond (40), une surface de plafond (42) et deux surfaces de paroi latérale (44) et **en ce que** la surface de fond (40) et/ou la surface de plafond (42) et/ou les deux surfaces de paroi latérale (44) portent au moins un élément de guidage de jet (56)
et/ou
c) une hauteur maximale (70) de l'au moins un élément de guidage de jet (56) par rapport à la paroi de buse (38) intérieure se situe dans une plage, laquelle correspond environ à 0,01 fois à environ 0,1 fois une longueur (68) de l'au moins un élément de guidage de jet (56) parallèlement à la direction d'écoulement,
en particulier environ à 0,02 fois à environ 0,07 fois,
et/ou
d) une hauteur maximale (70) de l'au moins un élément de guidage de jet (56) par rapport à la paroi de buse (38) intérieure se situe dans une plage d'environ 0,05 m à environ 0,2 m,
en particulier dans une plage d'environ 0,07 m à environ 0,14 m,
et/ou
e) la surface de guidage (62) est courbée de manière convexe et/ou concave.

8. Buse de soufflerie selon l'une quelconque des revendications précédentes, **caractérisée en ce que** la surface de guidage (62) présente une courbure avec un rayon de courbure (84) dans une plage, laquelle correspond environ à 1,5 fois à environ 3 fois une longueur de l'au moins un élément de guidage de jet (56),
de préférence à environ 2 à 2,7 fois.

9. Buse de soufflerie selon l'une quelconque des revendications précédentes, **caractérisée en ce que** la surface de guidage (62) est réalisée sous la forme d'une découpe d'une surface de cylindre (86).

10. Buse de soufflerie selon l'une quelconque des revendications précédentes, **caractérisée en ce que** la surface de guidage (62') est courbée sous forme d'un profil (88) optimisé de manière aérodynamique.

11. Buse de soufflerie selon l'une quelconque des revendications précédentes, **caractérisée en ce que** l'au moins un élément de guidage de jet (56) est réalisé sous la forme d'une partie saillante optimisée de manière aérodynamique ou d'un évidement optimisé de manière aérodynamique,
en particulier la partie saillante comprend une face de recouvrement (80), laquelle définit la surface de guidage (62).

12. Buse de soufflerie selon la revendication 11, **caractérisée en ce que** la partie saillante présente au moins un évidement (90), en particulier l'au moins un évidement (90) ouvre latéralement la partie saillante transversalement à la direction d'écoulement.

13. Buse de soufflerie selon l'une quelconque des revendications précédentes, **caractérisée en ce que** l'au moins un élément de guidage de jet (56) définit une cavité (82), laquelle est ouverte latéralement transversalement à la direction d'écoulement et est délimitée par la face de recouvrement (80) et la paroi de buse (38) intérieure.

14. Buse de soufflerie selon l'une quelconque des revendications précédentes, **caractérisée en ce que** l'élément de guidage de jet (56 ; 56' ; 56" ; 56''') est réalisé en symétrie spéculaire par rapport à un plan de symétrie (102) s'étendant parallèlement à la direction d'écoulement et perpendiculairement à la paroi de buse (38).

15. Soufflerie (10), en particulier soufflerie pour mesures aéroacoustiques à guidage d'air fermé, comprenant une buse de soufflerie (14) selon l'une quelconque des revendications précédentes.
